**Europäisches Patentamt**

**(19) European Patent Office**

**Office européen des brevets**

(11) Publication number : **0 330 660 B1**

## (12) EUROPEAN PATENT SPECIFICATION

(45) Date of publication of patent specification :
20.05.92 Bulletin 92/21

(51) Int. Cl.⁵ : **B65B 63/02, A01F 25/14**

(21) Application number : **87906843.5**

(22) Date of filing : **27.10.87**

(86) International application number :
**PCT/GB87/00758**

(87) International publication number :
**WO 88/03114 05.05.88 Gazette 88/10**

(54) **METHOD OF AND APPARATUS FOR PRESERVING FORAGE IN BAGS.**

(30) Priority : **27.10.86 GB 8625620**

(43) Date of publication of application :
**06.09.89 Bulletin 89/36**

(45) Publication of the grant of the patent :
**20.05.92 Bulletin 92/21**

(84) Designated Contracting States :
**AT BE CH DE FR GB IT LI LU NL SE**

(56) References cited :
**CH-A- 452 979**
**DE-A- 1 954 729**
**FR-A- 1 463 900**

(56) References cited :
**FR-A- 2 173 429**
**FR-C- 2 305 099**
**GB-A- 2 130 547**
**GB-B- 1 512 804**

(73) Proprietor : **WESTAWAY, Mark**
**Love Lane Farm**
**Marldon, Paignton, Devon TQ3 1SP (GB)**

(72) Inventor : **WESTAWAY, Mark**
**Love Lane Farm**
**Marldon, Paignton, Devon TQ3 1SP (GB)**

(74) Representative : **Weston, Robert Dale et al**
**c/o PHILLIPS & LEIGH 7 Staple Inn**
**Holborn London WC1V 7QF (GB)**

## Description

This invention relates to a method of and apparatus for preserving forage for fermentation in bags and also relates to forage bagged for fermentation.

In the production of preserved forage material, for example by the method described in Patent Specification No. GB 1512804, it has been the practice to bale the material in the field and subsequently to compress it further in a special machine before sealing it within a bag to prevent a mass flow of air in or out, and permitting the escape through a non-return valve of the gaseous products of initial aerobic fermentation. Following bagging, some re-expansion can take place, with the result that the bagged material would tend to assume a rectangular shape with bulging, part spherical sides and would thus be very awkward to handle and stack.

The aforesaid special machine is a compacting machine where the bales are fed longitudinally from the side into a chamber where they are compressed along the three axes successively, with the major compression taking place along the longitudinal axis of the bale, that is to say at right angles to the general direction of the majority of the stalks in the forage. The bale was then "extruded" sideways i.e. transversely of the longitudinal axis of the bale through a spout over which a bag was placed lengthwise to receive it. Re-expansion of the bale was then resisted by the bag, most of the re-expansion being sideways in the bag, resulting in a bagged material with somewhat bulged sides. Aside from any other considerations, material bagged in this way does not stack conveniently, on account of its shape. When, for example, it has been desired to stack the material on pallets for ease of bulk handling, it has been necessary to shrink-wrap each entire pallet load to prevent parts of the load being shed inadvertently.

Further compacting and sealing machines for forage crop are shown in GB-A-2130547 and DE-A-1954729.

According to the present invention, a method of preserving forage crop wherein the crop is:-

cut in the field,

wilted to a given dry matter content,

picked up and compressed into bales, with the majority of the crop stalks lying in layers transverse to the direction of compression,

further compacted, and

then sealed airtight in a bag;

comprises:-

further compacting the baled crop in one direction only of the bale, loading the further compacted bale into a bag in the direction of further compaction and sealing of the top of the bag airtight transverse to said direction of further compaction before the further compacted bale can fully re-expand.

By this means, the compacted bale only partially re-expands back along the original direction of compaction, the bag preventing full re-expansion of the compacted bale and leaving the sides of the bale essentially unchanged. Also, sealing the bag before full re-expansion leaves free the sealing zone of the bag, resulting in an airtight seal and retaining the crop compaction that is essential to the fermentation process, as the amount of oxygen remaining in the sealed bag has to be limited if the crop is to ferment and not spoil.

In a preferred embodiment, the baled crop is further compacted in the direction of bale compression.

A conventional hay baler is described in "The Universal Encyclopaedia of Machinery", published by George Allen & Unwin Limited in 1967 at pages 436 and 437; such a baler forms bales with ties running in the direction along which the bale was originally compressed, with the majority of the stalks in the forage crop lying in layers transverse to the direction of bale compression.

Although it is possible to achieve adequate compressinn in the field by a suitable design of baler, and even by choosing suitable bale chamber dimensions en proportions, the means required to bag the material while preventing substantial re-expansion is somewhat unwieldy for incorporation into a moving machine. Clearly, a purpose designed or modified baler would be an expensive item. Also, special baling would tend to slow down the overall process which could prevent maximum advantage being taken of the right weather and crop conditions for cutting and wilting the crop. It is therefore preferred to bale the cut crop with a conventional hay baler, wherein some compression of the bale occurs, and subject it later to further compaction, in association with bagging.

A further advantage of first baling the wilted crop and thereafter further compacting and bagging the baled crop, is that bales can be left in a field for up to 24 hours after baling without deterioration to the wilted crop. Thus, wilted crop can be baled at the right time and bagged later; this time interval also enables the overall operation to be smoothed out as crop baled the previous afternoon, say, can be compacted and bagged in a morning before that day's crop is ready for baling.

In an embodiment of the method of the present invention, the bales are cut prior to compaction of the baled crop. By a selection of size of cut bale, which controls transverse dimension of width and depth and of compaction of the cut bale, which controls the longitudinal dimension of length, bagged bales can be produced having length to width to depth proportions well suited to stacking and palletisation.

By way of example, an initial 112 lb (nominal 50 kg) bale of normal proportions such as 36 : 18 : 16, when cut in two and compacted lengthwise can form a pair of bagged 56 lb (nominal 25 kg) bales each of 24 : 16 : 9 proportion. The 3 to 2 ratio of length to width of the bagged bale can be stacked in alternating, bonded layers on a standard 48 x 48 pallet. By stacking in alternate directions a well bonded pile can be formed which requires the minimum of support for adequate preservation of its integrity during transport. Bales bagged by current methods on the other hand need to be shrink-wrapped after stacking on a pallet in order to keep them from falling off and still need to be handled by slings whereas bagged bales in accordance with the present invention are far more stable and can be stacked on pallets and thereafter handled by fork-lift trucks. Also a reasonably light weight, easily handled bagged bale is produced.

Clearly, bales of other sizes can be cut accordingly to produce bagged bales having easily stackable dimensions.

In a preferred embodiment of the present invention, a bale is cut in said direction of bale compression.

By cutting and further compacting bales, the original orientation of the cut crop transverse to the direction of bale compression is maintained and this has the advantage that a bagged bale can be opened at the top in the usual way and the fodder can easily be removed in layers without disturbing remaining fodder; this lessens entry of air and, combined with the ease of rolling a bag top to re-seal it, enables fodder to remain usable in an opened bag for longer periods of time.

By way of example, the aforementioned 36 : 18 : 16 bale, parted into a 36 : 9 : 16 half-bale would be compacted to approximately half its length, i.e. 18 : 9 : 16 and then sealed into a 24 : 9 : 16 bag. After sealing, the compacted part bale partially re-expands to a 24 : 9 : 16 size. Note that as no effective compaction is made width- or depth-wise of the part bale, there is no transverse re-expansion and the bale sides therefore remain essentially flat; again aiding stacking of bagged bales.

Compaction is preferably limited to not more than a 50% reduction in bale length to prevent bruising or other damage to the crop.

Also according to the present invention, forage crop bagging apparatus comprises:-

means to receive crop in bales of given size and formed of crop compressed in layers wherein the majority of the crop stalks lie transverse to the direction of bale compression; means to feed the bales to a chamber;

means operative within the chamber to further compact the bale;

bagging apparatus at the chamber outlet to receive further compacted bales therefrom; and,

means to seal further compacted bales airtight in bags
wherein:-

the receiving and feeding means feed the bale in said direction of bale compression to the chamber, which has cross-sectional dimensions substantially the same as the transverse dimensions of the bale;

the compaction means further compact the bale in said direction of bale compression; and,

the sealing means seal the top of the bags airtight transverse to the direction of further compaction before full re-expansion of the further compacted bale.

In a preferred embodiment of the present invention:-

the compaction chamber is elongate, is arranged with its longitudinal axis vertical and is provided with a discharge spout at its lower end;

the compaction means is a plunger reciprocable within the compaction chamber and operative along the longitudinal axis thereof;

the length of the compaction chamber is sufficient to contain at least two bales, with an incoming bale compacted between the plunger and the preceding bale;

means are provided to insert a separator sheet between each bale feed through the compaction chamber;

the bagging apparatus is a vertical form and fill bagger, disposed about the compaction chamber and having vertical seam sealing means to form plastics material sheeting into a tube about the compaction chamber and horizontal sealing and cutting means below the discharge spout to form and seal bags in which further compacted bales are received and contained;

the plunger is arranged to compact a bale in the compaction chamber to a length that is less than the given length, and the bagger is arranged to form a bag of said given length;

whereby a further compacted bale can be discharged into a bag with shorter length than that of the bag;

a cutter is provided to cut bales in said direction of bale compression into part bales of given transverse dimensions and means are provided to positively carry bales past the cutter;

an in-feed hopper is provided at the top of the compaction chamber to receive part bales from the cutter, the in-feed hopper having hinged side and front plates controlled to be opened away from one another to receive a part bale, then be closed towards one another to align a part bale with the compaction chamber.

Again, according to the present invention, preserved forage crop compressed and sealed for fermentation in an airtight bag wherein further uni-directionally compacted crop is partially re-expanded towards the seal at the top of the bag and transverse to the direction of further compaction.

In a preferred embodiment, the bag is elongate, is sealed transversely to the compaction axis thereof and the crop is layered in planes transverse to said compaction axis;

the bagged crop is oblong with essentially flat sides; and,

the ratio of the compaction axis dimension to one transverse dimension is 3 : 2.

The above and other features of the present invention are illustrated, by way of example, in the drawings wherein:-

Fig. 1 is a schematic, perspective view of bale cutting, compacting and bagging apparatus in accordance with the present invention;

Figs. 2a, b, c, d and e are illustrative, sectioned views of a bag being formed by the apparatus of Fig. 1 and a compacted bale being loaded therein; and,

Figs. 3a, b and c are, respectively, side and end elevations and a plan of a bale, a longitudinally cut and quarter rolled part bale and a bagged part part bale formed by the apparatus of Fig. 1.

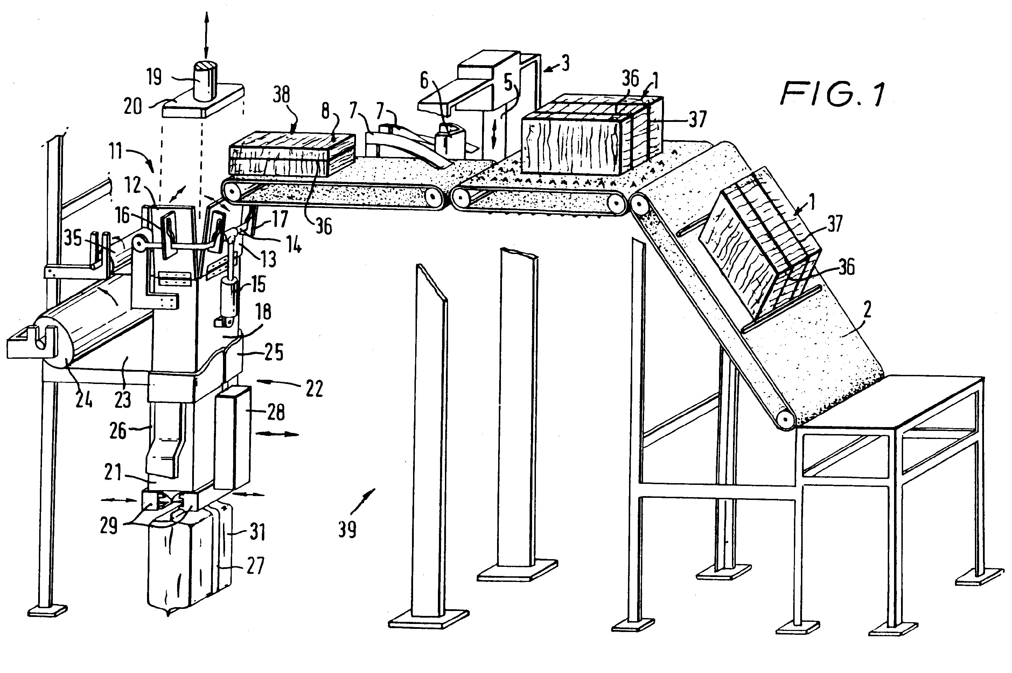

As shown by Figure 1 a bale 1 of wilted, 50% by weight dry matter, forage (such as grass or lucerne) is transported by an elevated conveyor 2 to a cutting station 3. A further, horizontal conveyor 4, is provided with spikes to positively carry the bale 1 longitudinally past a cutter, e.g. a silage knife. A hydraulic ram could be used instead of spiked conveyor 4 to force the bale 1 past the silage knife. Immediately behind the silage knife is a stainless steel divider 6 with a pair of rails 7 to separate and roll a cut bale as illustrated at 8, through a quarter-turn about the longitudinal axis of the bale.

Hereafter only half of the apparatus is illustrated, normally a second vertical bale compactor and bagger is arranged side-by-side with the one illustrated. This being to process both half-bales simultaneously, to speed production and, as is normally required for any agricultural crop storage and preservation process, to provide redundancy of machinery.

The vertical bale compactor 10 has an in-feed hopper 11 to receive cut bales 8 end on, i.e. longitudinally. The in-feed hopper 11 has hinged side and face plates 12, 13 respectively controlled by a pivoted stirrup 14 powered by a hydraulic ram 15, the stirrup operating in cams 16, 17 attached to the plates such that the plates are controlled by stirrup 14, ram 15 and cams 16, 17 to open away from one another to form a tapering chute to receive bales and then close towards one another to align a bale with an open-ended, elongate stainless steel compaction chamber 18 directly below the infeed hopper 11. The cross-sectional dimensions of the chamber 18 are essentially the same as the transverse dimensions of the in-fed part bale. There is sufficient power in the in-feed hopper plates to slightly compress the sides of a part-bale to ensure that they conform to the standardised, cross-sectional size of the compaction chamber 18.

Located above the compaction chamber 18 is a long-stroke, hydraulic ram of which the piston 19 terminates in a plunger 20 of complementary shape to the compaction chamber 18. The piston and plunger operates down through the in-feed hopper and acts to compact the in-fed part-bale 8 against the resistance of a bale or bales already within and further down the chamber. The compaction chamber 18 is long enough to house 4 to 5 bales of varying degrees of compaction, with compacted bales emerging from a discharge spout 21 at the bottom of the chamber for each operational stroke of the piston and plunger 19, 20.

Arranged about chamber 18 is a generally conventional vertical form and fill bagger 22 which draws plastics sheet 23 from a roll 24 through a forming shoulder 25 into a tube 26, the overlapped vertical seam 27 of which is sealed by a vertical sealing bar 28, to a horizontal double sealing bar and cutter 29 beneath the discharge spout 21.

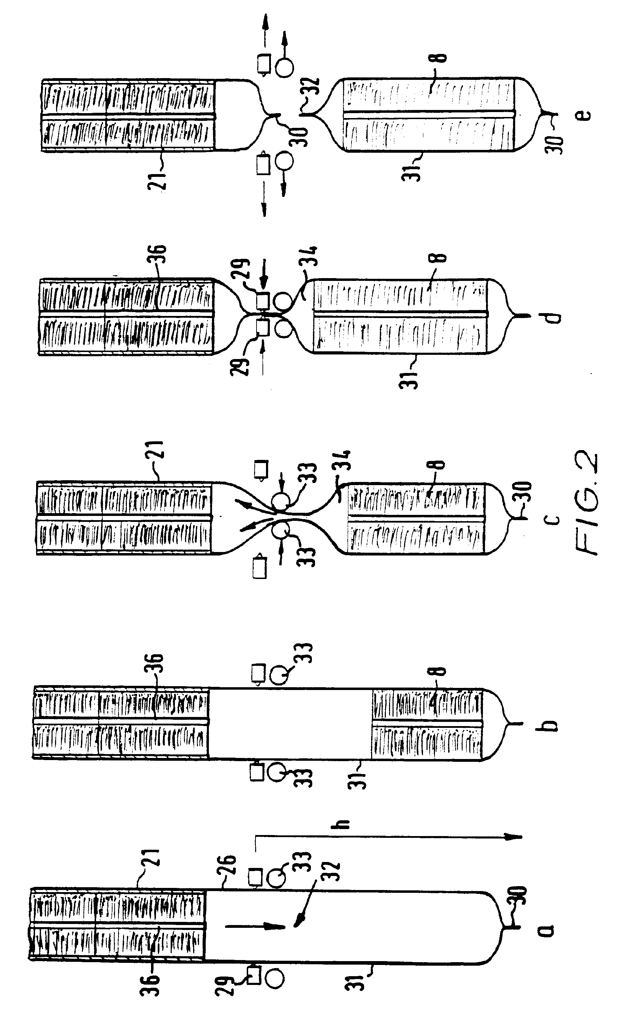

In operation, as shown by Figs. 2a to e, the tube 26, having already had the bottom 30 sealed by the preceding cycle, is fed downwardly so that the bag bottom 30 is a given distance 'h' below the horizontal sealing bar 29; the bag bottom is sensed by a sensor (not shown) below the spout 21 and thus the bag can be formed to a given length h. Air is then blown into the bag, as shown by the arrows in Fig. 2a, between the tube 26 and the discharge spout 21, to inflate the empty, open mouthed bag 31 and smooth-out any wrinkles, especially around the top 32 of the bag. Compacting plunger 19 is then operated and a fully compacted bale 8 is ejected into the bag 31 (Fig. 2b). As soon as the compacted bale is in the bag a pair of pivoted rollers 33 are moved towards one another to squeeze the bag top 32 , expressing unwanted air out of the bag (again as indicated by the arrows in Fig. 2c) and to inhibit longitudinal re-expansion of the bale 8. As shown, the fully compacted bale 8 is approximately half the overall bag length h as it emerges from the discharge spout 21 but it will immediately start to re-expand. Once excess air has been expelled from the bag 31, the horizontal sealing bars 29 are closed towards one another, to seal the top 32 of bag 31, cut the sealed bag from the tube 26 and form the bottom seal 30 for the next bag, as indicated by Fig. 3e. Most importantly, a clear head space 34 is left above the bale 8 within the bag top 32 during the sealing operation to prevent any crop protruding across the sealing zone (between the pinch point of rollers 33 and the top seal 32) and thus spoil the seal 32.

As it is the resistance of bales accumulated in the chamber 18 that provides back pressure for compaction, each bale has to be separated from the preceding bale and this is effected by a separate roll 35 of plastics sheeting feeding in transversely of and above the compaction chamber 18 and below the infeed hopper 11. A knife, or action of the plunger 20 itself, cutting off lengths of sheeting to form each separator.

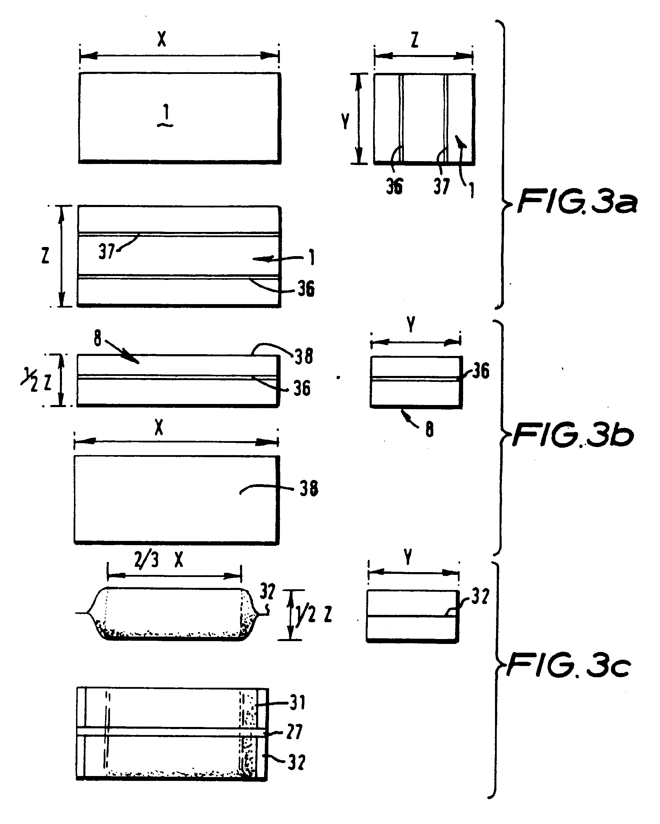

In an example and as illustrated by Figs. 3a, b and c, bales 1 of wilted grass from a John Deer 466A or equivalent hay baler having dimensions of 36″ length (x), 18″ height (y) and 16″ depth (z) (915 mm X 457 mm X 406 mm) are off-loaded from a bale wagon onto the elevator 2 on their sides i.e. orientated with the longitudinal axis of the bale in the direction of travel and the transverse y and z axes respectively upwards and across the conveyor; this leaves the two baling bands 36, 37 longitudinally of the bale and each lying in a generally vertical plane. After cutting and rolling through a quarter-turn about the longitudinal axis a part bale 8 is formed still of the same length x, but now of the y dimension in width and a half z dimension in height; each bale 8 having one of the bands 36 or 37 longitudinal of the bale but now in a generally horizontal plane.

The part bale is then tipped and fed into in-feed hopper 11 and from thence into compaction chamber 18 that is y dimension wide and half z dimension deep. The bale is compacted to a half x dimension length whilst the bag 31 is formed to a two-thirds x length (-h). There is thus an approximately one-quarter x head space 34 when the compacted bale 8 is in the bag 31 whilst horizontal sealing bar 29 is operated. Thereafter, the bale can only expand longitudinally to the two-thirds x length of the bag, the transverse dimensions of y and half z remaining essentially unaltered by the whole process. For an original 36″ X 18″ X 16″ bale a 24″ X 16″ X 9″ bagged bale is formed and, as previously described, these pack in alternate layers on a standard 48″ pallet; three bales one way and two bales the other.

The bagged bales have generally flat sides whilst cut side 38 has a surface that exerts a high frictional grip against the surface of a surrounding bag. This greatly facilitates the operation of sealing the bag after compaction and bagging. The cut surface is also flat, and remains more or less so, even after subsequent compaction so that the creation of a stable pile of bagged bales is greatly facilitated.

The whole apparatus is supported on a framework indicated at 39. The use of a vertical system has been found to have considerable advantages. For example, it permits the use of very high forming pressures in compaction chamber 18, which necessarily has to be unsupported over a considerable length. Attempts to use horizontal chambers have resulted in their deforming under the combined effect of friction and gravity. It also facilitates movement of bales through the apparatus.

It will be appreciated that by starting with a bale of about twice the required size a further advantage is obtained in that field production can be that much faster. Also in the compacting process, the treatment speed is increased due to having two treatment channels from each initial bale feed.

Whilst it is preferable and most economical to use a conventional hay baler that lays the crop generally transversely of the longitudinal axis of the bale, other crop orientations with a bale or bales of different shapes and proportions, requiring different directions and numbers of cuts to produce a bagged bale (preferably of stacking proportions) can be employed. The proviso is that a bale or part of a bale is compacted in one direction only and that the bag is loaded in the direction of compaction with the compacted bale restrained by the bag from fully re-expanding and re-expanding against the bag seal. The sides of the bale are left un-compacted and a rectangular bale would thus remain with substantially flat sides and still have good sealing of the bag by partial re-expansion of the compacted bale within the formed bag.

## Claims

1. A method of preserving forage crop wherein the crop is cut in the field, wilted to a given dry matter content, picked up and baled so that the majority of the crop stalks are compressed in layers transverse to the direction of compression, further compacted and then sealed airtight in a bag **characterised in that** the baled crop is further compacted in one direction only of the bale, the further compacted bale is loaded into a bag in the direction of further compaction and the top of the bag is sealed airtight transverse to said direction of further compaction before the further compacted bail can fully re-expand.

2. A method as claimed in claim 1 **and further characterised in that** the baled crop is further compacted in the direction of bale compression.

3. A method as claimed in claim 1 or claim 2 **and further characterised in that** the bales are cut into two or more parts prior to further compaction.

4. A method as claimed in claim 3 **and further characterised in that** bales are cut in said direction of bale compression.

5. A method as claimed in claim 4 **and further characterised in that** a rectangular bale having a ratio of the dimension in said direction of bale compression to one transverse dimension of 2 : 1, is cut to have said ratio as 4 : 1 and is then further compacted, bagged and partially re-expanded to have said ratio as 3 : 2.

6. A method as claimed in any of claims 2 to 5 **and further characterised in that** the baled crop is further compacted in said direction of bale compression to half its original length prior to loading the further compacted bale into a bag.

7. A method as claimed in any of claims 1 to 6 **and further characterised in that** the crop is wilted to approximately 50% dry weight prior to baling.

8. A method as claimed in any of claims 1 to 7 **and further characterised in that** the baled crop is further compacted and sealed into bags within 24 hours of being baled.

9. Forage crop bagging apparatus comprising means (2, 4) to receive crop in bales (1) of given size, and formed of crop compressed in layers wherein the majority of the crop stalks lie transverse to the direction of bale compression, means (2) to feed the bales to a chamber (18); means (19, 20) operative within the chamber to further compact the bale, bagging apparatus (22) at the chamber outlet (21) to receive further compacted bales (8) therefrom and means (29) to seal further compacted bales airtight in bags (31) **characterised in that** the receiving and feeding means (2) feed the bale (1) in said direction of bale compression to the chamber (18), which has cross-sectional dimensions substantially the same as the transverse dimensions of the bale, the compaction means (19, 20) further compact the bale in said direction of bale compression thereof, and the sealing means (29) seal the top of the bags (31) airtight transversely of the direction of further compaction, before full re-expansion of the further compacted bale.

10. Apparatus as claimed in claim 9 **and further characterised in that** the compaction chamber (18) is elongate, is arranged with its longitudinal axis vertical and is provided with a discharge spout 21) at its lower end.

11. Apparatus as claimed in claim 9 or claim 10 **and further characterised in that** the compaction means is a plunger (20) reciprocable within the compaction chamber (18) and operates along the longitudinal axis thereof.

12. Apparatus as claimed in claim 11 **and further characterised in that** the length of the compaction chamber (18) is sufficient to contain at least two bales (8), with an incoming bale compacted between the plunger (20) and the preceding bale.

13. Apparatus as claimed in claim 12 **and further characterised in that** means (35) are provided to insert a separator sheet between each bale (1) fed to the compaction chamber (18).

14. Apparatus as claimed in any of claims 10 to 13 **and further characterised in that** the bagging apparatus is a vertical form and fill bagger (22), disposed about the compaction chamber (18) and having vertical seam sealing means (28) to form plastics material sheeting (23) into a tube (26) about the compaction chamber and horizontal sealing and cutting means (29) below the discharge spout (21) to form and seal bags (31) in which further compacted bales (8) are received and contained.

15. Apparatus as claimed in claims 12 and 13 **and further characterised in that** the plunger (20) is arranged to compact a bale (1) in the compaction chamber (18) to a length (1/2 x) that is less than a given length (h), and the bagger (22) is arranged to form a bag (31) of said given length; whereby a further compacted bale (8) can be discharged into a bag with a shorter length than that of the bag.

16. Apparatus as claimed in any of claims 9 to 15 **and further characterised in that** a cutter (3) is provided to cut bales (1) in said direction of bale compression into part-bales (8) of given transverse dimensions and means (4) are provided to positively carry bales past the cutter.

17. Apparatus as claimed in claim 16 as dependent upon claim 10 **and further characterised in that** an infeed hopper (11) is provided at the top of the compaction chamber to receive a part-bale from the cutter, the in-feed hopper having hinged side and front plates (12 and 13) controlled to be opened away from one another to receive a part-bale (8) and then be closed provided at the top of the compaction chamber to receive a part-bale from the cutter, the in-feed hopper having hinged side and front plates (12 and 13) controlled to be opened away from one another to receive a part-bale (8) and then be closed towards one another to align a part-bale with the compaction chamber (18).

18. Preserved forage crop (1) compressed and sealed for fermentation in an airtight bag (31) **characterised in that** further uni-directionally compacted crop (1) is partially re-expanded towards a seal (32) at the top of the bag (31) and transverse to the direction of further compaction.

19. Bagged forage crop as claimed in claim 18 **and further characterised in that** the bag (31) is elongate and is sealed (32) transversely to the compaction axis (x) thereof; with the majority of the stalks in the crop (1) compressed in layers (y, z) transverse to said compaction axis.

20. Bagged forage crop as claimed in 19 **and further characterised in that** the bagged crop (8) is oblong with essentially flat sides (38).

21. Bagged forage crop as claimed in claim 20 **and further characterised in that** the ratio of the compaction axis dimension (x) to one transverse dimension (y or z) of the bag (31) is 3 : 2.

**Patentansprüche**

1. Ein Verfahren um Futtererernte aufzubewahren, worin das Getreide auf dem Feld geschnitten, zu einem gegebenem Trockenheitsgehalt welken gelassen, aufgeladen und so emballiert, dass die Mehrheit der Getreidehalme in Lagen querlaufend zur Richtung der Kompression komprimiert werden, weiter verdichtet (nur in einer Richtung des Ballens) und dann luftdicht in einem Sack verschlossen wird, dadurch gekennzeichnet, dass der weiter verdichtete Ballen in der Richtung der weiteren Verdichtung in einen Sack geladen und das obere Ende des Sackes luftdicht, über eine Seite des Sackes, querlaufend zur besagten Richtung weiterer Verdichtung verschlossen wird, bevor der weiter verdichtete Ballen voll reexpandieren kann.

2. Ein Verfahren wie in Anspruch 1 beansprucht und weiter dadurch gekennzeichnet, dass das emballierte Getreide weiter verdichtet wird in der Richtung der Ballenkompression.

3. Ein Verfahren wie in Anspruch 1 oder Anspruch 2 beansprucht und weiter dadurch gekennzeichnet, dass die Ballen vor weiterer Verdichtung in zwei oder mehr Teile geschnitten werden.

4. Ein Verfahren wie in Anspruch 3 beansprucht und weiter dadurch gekennzeichnet, dass die Ballen in besagter Richtung der Ballenkompression geschnitten werden.

5. Ein Verfahren wie in Anspruch 4 beansprucht und weiter dadurch gekennzeichnet, dass ein rechteckiger Ballen, mit einem Verhältnis der Ausdehnung in besagter Richtung der Ballenkopression zu einer querlaufenden Ausdehnung von 2 : 1, geschnitten wird, um besagtes Verhältnis als 4 : 1 zu haben, und dann weiter verdichtet, eingesackt und partiell reexpandiert wird, um das besagte Verhältnis als 3 : 2 zu haben.

6. Ein Verfahren wie in irgendeinem der Ansprüche 2 bis 5 beansprucht und weiter dadurch gekennzeichnet, dass das emballierte Getreide in besagter Richtung der Ballenkompression zur Hälfte seiner Originallänge verdichtet wird, vor dem Laden der weiter verdichteten Ballen in einen Sack.

7. Ein Verfahren wie in irgendeinem der Ansprüche 1 bis 6 beansprucht und weiter dadurch gekennzeichnet, dass das Getreide vor der Emballierung zu ungefähr 50% Trockengewicht welken gelassen wird.

8. Ein Verfahren wie in irgendeinem der Ansprüche 1 bis 7 beansprucht und weiter dadurch gekennzeichnet, dass das emballierte Getreide weiter verdichtet und innerhalb von 24 Stunden nach Emballierung in Säcke verschlossen wird.

9. Futtergetreideeinsackungsvorrichtung beinhaltend Mittel (2, 4), um das Getreide in Ballen (1) einer gegebenen Grösse und aus in Lagen komprimiertem Getreide gebildet, wobei die Mehrheit der Getreidehalme querlaufend zur Richtung der Ballenkompression liegen, zu empfangen, Mittel (2), um die Ballen einem Raum (18) zuzuführen; Mittel (19, 20) im Raum operierend, um den Ballen weiter zu verdichten, Einsackungsvorrichtung (22) am Raumausgang (21), um weiter verdichtete Ballen (8) davon zu empfangen und Mittel (29), um die weiter verdichteten Ballen luftdicht in Säcke (31) zu verschliessen, dadurch gekennzeichnet, dass die empfangenden und zuführenden Mittel (2) den Ballen (1) in besagter Richtung der Ballenkompression dem Raum (18), dessen querschnittsausdehnungen im wesentlichen die gleichen sind, wie die querlaufenden Ausdehnungen des Ballens, zuführen, die Verdichtungsmittel (19, 20) verdichten den Ballen weiter nur in besagter Richtung der Ballenkompression davon, und die Verschliessungsmittel (29) verschliessen das obere Ende des Sackes (31) luftdicht, über eine Seite des Sackes, querlaufend zur Richtung weiterer Verdichtung, bevor voller Reexpansion des weiter verdichteten Ballens.

10. Vorrichtung wie in Anspruch 9 beansprucht und weiter dadurch gekennzeichnet, dass der Verdichtungsraum (18) länglich ist, mit seiner Längsachse vertikal angeordnet und ausgestattet mit einer Entladungsschütte (21) an seinem unteren Ende.

11. Vorrichtung wie in Anspruch 9 oder Anspruch 10 beansprucht und weiter dadurch gekennzeichnet, dass das Verdichtungsmittel ein Presskolben (20) ist, der im Verdichtungsraum (18) hin- und herbewegbar ist und entlang der Längsachse davon operiert.

12. Vorrichtung wie in Anspruch 11 beansprucht und weiter dadurch gekennzeichnet, dass die Länge des Verdichtungsraums (18) ausreichend ist, um wenigstens zwei Ballen (8) zu enthalten, mit dem neueintretenden Ballen verdichtet zwischen dem Presskolben (20) und dem vorangehenden Ballen.

13. Vorrichtung wie in Anspruch 12 beansprucht und weiter dadurch gekennzeichnet, dass Mittel (35) vorhanden sind, um eine Trennplatte zwischen jede dem Verdichtungsraum (18) zugeführte Balle (1) einzuführen.

14. Vorrichtung wie in irgendeinem der Ansprüche 10 bis 13 beansprucht und weiter dadurch gekennzeichnet, dass die Einsackungsvorrichtung eine vertikale Formier- und Füllereinsackungsvorrichtung (22) ist, die um den Verdichtungsraum (18) angeordnet ist und vertikale Saumverschliessungsmittel (28) hat, um Kunststofffolien (23) in eine Röhre (26) um den Verdichtungsraum zu formieren und horizontale Verschliessungs- und Schneidemittel (29) unterhalb der Entladungsschütte (21), um Säcke (31), in welche die weiter verdichteten Ballen (8) empfangen und eingeschlossen werden, zu formieren und zu verschliessen

15. Vorrichtung wie in Ansprüchen 12 und 13 beansprucht und weiter dadurch gekennzeichnet, dass der Presskolben (20) angeordnet ist, um einen Ballen (1) im Verdichtungsraum (18) zu einer Länge (1/2 x), die weniger als eine gegebene Länge (h) ist, zu verdichten und dass der Einsacker (22) angeordnet ist, um einen Sack (31) der besagten gegebenen Länge zu bilden; wobei ein weiter verdichteter Ballen (8) in einen Sack mit einer kürzeren Länge als der des Sackes entladen werden kann.

16. Vorrichtung wie in irgendeinem der Ansprüche 9 bis 15 beansprucht und weiter dadurch gekennzeichnet, dass eine Schneidevorrichtung (3) vorhanden ist, um Ballen (1) in besagter Richtung der Ballenkompression in Teil-Ballen (8) gegebener querlaufenden Ausdehnungen zu schneiden und dass Mittel (4) vorhanden sind, um die Ballen an der Schneidevorrichtung vorbeizutragen.

17. Vorrichtung wie in Anspruch 16, abhängig von Anspruch 10, beansprucht und weiter dadurch gekennzeichnet, dass ein Vorschubstrichter (11) am oberen Ende des Verdichtungsraumes vorhanden ist, um einen Teil-Ballen von der Schneidevorrichtung zu empfangen, der Vorschubstrichter hat um Scharniere drehbare Seiten- und Vorderplatten (12 und 13), die gesteuert sind, um weg voneinander geöffnet den Teil-Ballen (8) zu empfangen und dann gegeneinander geschlossen einen Teil-Ballen mit dem Verdichtungsraum (18) ausrichten.

18. Aufbewahrte Futterernte (1) bereit zur Fermentation, komprimiert, weiter in einer Richtung verdichtet und dann in einen luftdichten Sack (31) verschlossen dadurch gekennzeichnet, dass die Futterernte (1), teilweise gegen den Sackverschluss (32) reexpandiert, der besagte Verschluss ist über die Seiten des Sackes querlaufend zur Richtung weiterer Verdichtung angeordnet.

19. Eingesackte Futterernte wie in Anspruch 18 beansprucht und weiter dadurch gekennzeichnet, dass der Sack (31) länglich ist und querlaufend zur Verdichtungsachse (x) davon verschlossen (32) ist; mit der Mehrheit der Halme im Getreide (1) in Lagen (y, z) querlaufend zu besagter Verdichtungsachse komprimiert.

20. Eingesackte Futterernte wie in Anspruch 19 beansprucht und weiter dadurch gekennzeichnet, dass das eingesackte Getreide (8) länglich, mit im wesentlichen flachen Seiten (38), ist.

21. Eingesackte Futterernte wie in Anspruch 20 beansprucht und weiter dadurch gekennzeichnet, dass das Verhältnis der Verdichtungsachsenausdehnung (x) zu einer querlaufenden Ausdehnung (y oder z) des Sackes (31) 3 : 2 ist.

## Revendications

1. Procédé de conservation d'une récolte de fourrage dans lequel le fourrage est coupé dans le champ, séché jusqu'à un contenu en matière sèche donnée, ramassé et bottelé de sorte que la majorité des tiges du fourrage soient comprimées en couches transversalement à la direction de compression, subit une compression supplémentaire dans une unique direction de la botte et est scellé de façon étanche à l'air dans un sac, caractérisé en ce que la botte ayant subi la compression supplémentaire est chargée dans un sac dans la direction de la compression supplémentaire et en ce que le haut du sac est scellé de façon étanche à l'air le long d'un côté du sac, transversalement à la direction de compression supplémentaire avant que la botte ayant subi la compression supplémentaire ne puisse complètement se dilater à nouveau.

2. Procédé selon la revendication 1, caractérisé en outre en ce que le fourrage bottelé subit une compression supplémentaire dans la direction de la compression de la botte.

3. Procédé selon la revendication 1 ou 2, caractérisé en outre en ce que les bottes sont coupées en deux ou plusieurs parties avant la compression supplémentaire.

4. Procédé selon la revendication 3, caractérisé en outre en ce que les bottes sont coupées dans ladite direction de la compression de la botte.

5. Procédé selon la revendication 4, caractérisé en outre en ce qu'une botte rectangulaire ayant un rapport de la dimension dans ladite direction de compression de la botte à une dimension transversale de 2 : 1, est coupée pour avoir un rapport de 4 : 1 et en ce qu'elle subit alors une compression supplémentaire, un ensachage et une nouvelle dilatation partielle pour présenter un rapport de 3 : 2.

6. Procédé selon l'une quelconque des revendications 2 à 5, caractérisé en outre en ce que le fourrage bottelé subit une compression supplémentaire dans ladite direction de compression de la botte jusqu'à atteindre la moitié de sa longueur initiale avant le chargement de la botte ayant subi la compression supplémentaire dans un sac.

7. Procédé selon l'une quelconque des revendications 1 à 6, caractérisé en outre en ce que le fourrage est séché jusqu'à approximativement 50 % en poids sec avant le bottelage.

8. Procédé selon l'une quelconque des revendications 1 à 7, caractérisé en outre en ce que le fourrage bottelé subit une compression supplémentaire et est scellé dans des sacs dans les 24 heures après avoir été bottelé.

9. Appareil d'ensachage de récolte de fourrage comprenant des moyens (2, 4) pour recevoir du fourrage en bottes (1) d'une taille donnée, et formées de fourrage comprimé en couche dans laquelle la majorité des tiges de fourrage s'étendent transversalement à la direction de la compression de la botte, des moyens (2) pour délivrer les ballots vers une chambre (18); des moyens (19, 20) fonctionnels à l'intérieur de la chambre pour réaliser une compression supplémentaire de la botte, un appareil d'ensachage (22) à la sortie de la chambre (21) pour recevoir les bottes (8) ayant subi la compression supplémentaire à partir de celle-ci et des moyens (29) pour sceller de façon étanche dans des sacs (31) les bottes ayant subi la compression supplémentaire, caractérisé en ce que les moyens de réception et d'alimentation (2 délivrent la botte (1) dans ladite direction de la compression de la botte vers la chambre (18) qui a des dimensions en coupe sensiblement identiques aux dimensions transversales de la botte, en ce que les moyens de compression (19, 20) réalisent une compression supplémentaire de la botte seulement dans ladite direction de la compression de celle-ci, et en ce que les moyens de scellement (29) scellent le haut des sacs (31) de façon étanche à l'air le long d'un côté du sac, transversalement à la direction de la compression supplémentaire, avant la nouvelle dilatation complète de la botte ayant subi la compression supplémentaire.

10. Appareil selon la revendication 9, caractérisé en outre en ce que la chambre de compression (18) est allongée, est ménagée avec son axe longitudinal vertical et est pourvue d'un orifice de décharge (21) dans sa partie inférieure.

11. Appareil selon la revendication 9 ou la revendication 10, caractérisé en outre en ce que les moyens de compression (20) comprennent un piston alternatif à l'intérieur de la chambre de compression (18) et en ce qu'il fonctionne le long de l'axe longitudinal de cette dernière.

12. Appareil selon la revendication 11, caractérisé en outre en ce que la longueur de la chambre de compression (18) est suffisante pour contenir au moins deux bottes (8), une botte arrivant étant compressée entre le piston (20) et la botte précédente.

13. Appareil selon la revendication 12, caractérisé en outre en ce que les moyens (35) sont prévus pour insérer une feuille de séparation entre chaque botte (1) délivrée dans la chambre de compression (18).

14. Appareil selon l'une quelconque des revendications 10 à 13, caractérisé en outre en ce que l'appareil d'ensachage est un ensacheur conformateur à remplissage vertical (22) disposé autour de la chambre de compression (18) et ayant des moyens de scellement à joint de scellement verticaux (28) pour former un tube (26) autour de la chambre de compression à partir de feuilles en matériau plastique (23), et des moyens de scellement et de découpage horizontaux (29) disposés en dessous de l'orifice de décharge (21) pour former et sceller des sacs (31) dans lesquels les bottes qui ont subi une compression supplémentaire (8) sont reçues et emballées.

15. Appareil selon la revendication 12 et 13, caractérisé en outre en ce que le piston (20) est conçu pour comprimer une botte (1) dans la chambre de compression (18) jusqu'à une longueur (1/2 x) inférieure à une longueur donnée (h) et en ce que l'ensacheur (22) est conçu pour former un sac (31) de ladite longueur donnée; une botte ayant subi une compression supplémentaire (8) pouvant être déchargée dans un sac avec une longueur plus courte que celle du sac.

16. Appareil selon l'une quelconque des revendications 9 à 15, caractérisé en outre en ce qu'un découpeur (3) est prévu pour couper les bottes (1) dans ladite direction de la compression de la botte en bottes partielles (8) de dimensions transversales données et en ce que des moyens (4) sont prévus pour transporter complètement les bottes au-delà du découpeur.

17. Appareil selon la revendication 16, en dépendance de la revendication 10, caractérisé en outre en ce qu'une trémie d'alimentation (11) est prévue dans la partie supérieure de la chambre de compression pour recevoir une botte partielle à partir du découpeur, la trémie d'alimentation ayant des plaques latérales et frontales articulées (12 et 13) commandées pour être ouvertes en s'éloignant l'une de l'autre pour recevoir une botte partielle (8) et pour être ensuite fermées l'une vers l'autre pour aligner une botte partielle avec la chambre de compression (18).

18. Récolte de fourrage conservée (1), prête à la fermentation, comprimée ayant subi une compression unidirectionnelle supplémentaire et scellée dans un sac étanche à l'air (31), caractérisée en ce que le fourrage (1) est partiellement dilaté à nouveau en direction du scellement (32) du sac, ledit scellement étant en travers des côtés du sac, transversalement à la direction de la compression supplémentaire.

19. Récolte de fourrage ensachée selon la revendication 18, caractérisée en outre en ce que le sac (31) est allongé et est scellé (32) transversalement à l'axe de compression (x) de celui-ci; la majorité des tiges de fourrage (1) étant comprimées en couches (y, z) transversalement audit axe de compression.

20. Récolte de fourrage ensachée selon la revendication 19, caractérisée en outre en ce que le fourrage ensaché (8) est oblong et présente des faces latérales essentiellement plates (38).

21. Récolte de fourrage ensachée selon la revendication 20, caractérisée en outre en ce que le rapport de la dimension d'axe de compression (x) à une dimension transversale (y ou z) du sac (31) est de 3 : 2.

*FIG.1*

FIG.2

EP 0 330 660 B1

FIG.3a

FIG.3b

FIG.3c